Europäisches Patentamt

(19) European Patent Office

Office européen des brevets

(11) Numéro de publication: **0 337 881**
A1

## (12) DEMANDE DE BREVET EUROPEEN

(21) Numéro de dépôt: 89401006.5

(22) Date de dépôt: 12.04.89

(51) Int. Cl.⁴: **G 02 B 27/26**
G 03 B 35/20, G 03 B 21/60

(30) Priorité: 12.04.88 FR 8805181

(43) Date de publication de la demande:
18.10.89 Bulletin 89/42

(84) Etats contractants désignés:
AT BE CH DE ES GB GR IT LI LU NL SE

(71) Demandeur: **Pochet, Roger**
**36 rue du Général de Gaulle**
**F-59400 Cambrai (FR)**

(72) Inventeur: **Pochet, Roger**
**36 rue du Général de Gaulle**
**F-59400 Cambrai (FR)**

(74) Mandataire: **Nony, Michel**
**Cabinet NONY & CIE 29, rue Cambacérès**
**F-75008 Paris (FR)**

(54) Système de projection optique sur écran d'images stéréoscopiques.

(57) L'invention concerne le domaine de la présentation sur écran de couples d'images stéréoscopiques.

Elle met en oeuvre deux projecteurs ( 1 ) et ( 2 ), chacun assurant la projection d'une image d'un couple, et étant disposés de chaque côté d'un écran ( 3 ), constitué de deux ensembles d'éléments alternés ( 21 ),( 22 ), respectivement réfléchissants et translucides, et ne dépolarisant pas la lumière. La selection visuelle est assurée par des filtres de polarisation croisés ( 5 ) ( 6 ) et ( 9 )( 10 ).

Les applications sont notamment celles de la présentation de programmes de télévision.

fig.2

**Description**

### Système de projection optique sur écran d'images stéréoscopiques.

La présente invention se rapporte au domaine de la stéréoscopie, procédé procurant la sensation de relief à partir de l'observation de deux images d'un objet vu sous deux angles différents, correspondant respectivement à l'oeil droit et l'oeil gauche d'un observateur, et concerne les applications où ces couples d'images stéréoscopiques sont observées par projection optique sur un écran.

Dans ce cas, les deux images d'un couple sont superposées sur l'écran, et il est impératif de ne permettre la vision respective de chacune d'elles qu'à l'oeil auquel elle est destinée. La réalisation de cette sélection est habituellement réalisée par mise en oeuvre du phénomène de polarisation de la lumière, les deux images étant respectivement projetées à travers deux filtres de polarisation à orientations permendiculaires, et les yeux de l'observateur étant munis de filtres de polarisation de mêmes orientations.

Chaque oeil ne voit ainsi que l'image dont la direction de polarisation est parallèle à celle du filtre dont il est muni, ce qui réalise la condition de sélection.

Cependant, un tel procédé stéréoscopique par projection optique en lumière polarisée présente l'inconvénient d'une absorption notable de lumière par suite de la présence des filtres de polarisation.

Cet inconvénient conduit, pour permettre une bonne visibilité des images projetées, à réduire les dimensions de celles-ci pour leur assurer une luminosité suffisante, et limite, par conséquent, le nombre de spectateurs placés devant l'écran.

Une telle diminution des dimensions est particulièrement marquée dans le cas où les couples d'images stéréoscopiques projetés proviennent d'équipements de télévision ou "vidéo", dont les niveaux d'éclairement sont habituellement très limités.

Le système de projection d'images stéréoscopiques faisant l'objet de la présente invention ne possède aucun de ces inconvénients.

Il assure d'une part une augmentation de la luminosité des images observées, et d'autre part, pour une même dimension d'écran, multiplie, par un facteur 2, le nombre de spectateurs pouvant observer l'écran.

Le système de l'invention comporte, comme dans l'art connu, deux projecteurs optiques, munis de filtres polarisants croisés, correspondant à l'une et l'autre des deux images d'un couple, et un écran de projection ne dépolarisant pas la lumière, mais, dans son fondement, l'invention d'une part place les deux projecteurs de part et d'autre de l'écran et d'autre part met en oeuvre un écran particulier, comportant une pluralité de régions réfléchissantes et de régions translucides.

Plus précisément, l'invention concerne un système de projectio optique sur écran de couples d'images stéréoscopiques, avec sélection par polarisation de la lumière, comportant deux projecteurs assurant respectivement la projection respective de l'une et de l'autre image d'un couple, et un écran avec deux faces, caractérisé en ce que ledit écran comporte un ensemble d'éléments réfléchissants ne dépolarisant pas la lumière, et un ensemble d'éléments translucides, débouchant sur les deux faces, les deux ensembles étant disposés en juxtaposition, et que chacun des deux projecteurs est respectivement disposé en vis-à-vis d'une des deux faces dudit écran.

L'invention sera mieux comprise à l'aide de la description ci-après, en s'appuyant sur les figures annexées, où :

- La figure 1 représente un système de projection sur écran d'images stéréoscopiques, avec sélection par polarisation de la lumière selon l'art connu ;
- La figure 2 représente un système de projection d'images stéréoscopiques, selon l'invention ;
- La figure 3 représente une variante du système de projection selon l'invention, avec observation sur les deux faces de l'écran ;
- La figure 4 représente un mode de réalisation de l'écran selon l'invention .

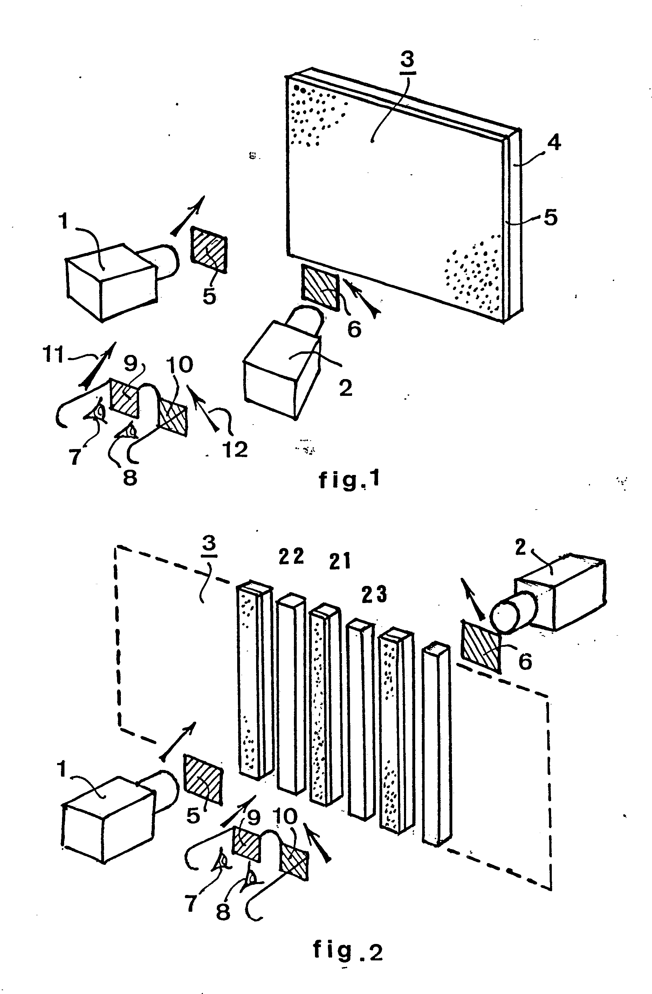

La figure 1 représente un système de projection sur écran, d'images stéréoscopiques, avec sélection par polarisation de la lumière, suivant l'art connu.

Ce système se compose de deux projecteurs optiques 1 et 2, chacun assurant la projection d'une image du couple stéréoscopique, image de type photographique, cinématographique ou vidéo, et d'un écran 3.

L'écran est constitué d'un support 4, et d'une couche 5 d'un matériau assurant la réflexion de la lumière incidente.

Pour assurer à chaque oeil d'un observateur la vision de l'image qui lui revient, cette sélection est réalisée par mise en oeuvre de la polarisation de la lumière. Pour cela, deux filtres polarisants 5 et 6 sont placés sur le passage des faisceaux lumineux des projecteurs, et les yeux 7 et 8 de l'observateur sont munis de filtres polarisants 9 et 10, arrangés en forme de lunettes. Les directions de polarisation respectifs 11 et 12 sont permendiculaires, et l'oeil droit 8 ne voit que l'image de droite, l'oeil gauche 9 l'image de gauche.

Cependant ce système comporte un grave inconvénient, à savoir la faible luminosité des images observées. En effet, la couche réfléchissante 5 de l'écran doit posséder la propriété de conserver la polarisation de la lumière lors de la réflexion des images à sa surface. Or les matériaux possédant cette caractéristique ont un coefficient de réflexion médiocre ; suivant un ordre de grandeur donné à titre d'exemple, il est compris entre 60 à 80 %.

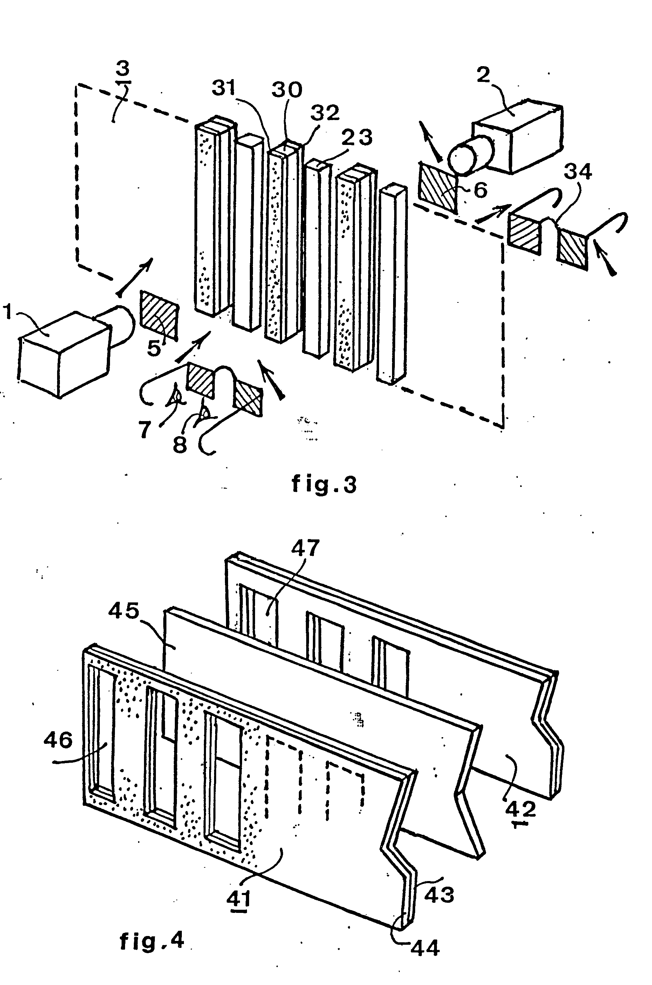

La figure 2 représente un système de projection sur écran d'images stéréoscopiques, avec sélection par polarisation de la lumière, selon l'invention.

Les éléments correspondants du système de la figure 1 portant les mêmes nombres-repères, le système se compose de deux projecteurs optiques 1 et 2, chacun projetant une image du couple stéréoscopique, et d'un écran de projection 3.

Selon l'invention, l'écran est constitué d'une double pluralité d'éléments, l'une d'entre elles, agissant par réflexion, étant constituée d'éléments tels que 21, porteurs d'une couche d'un matériau réfléchissant la lumière, telle que 22, l'autre d'entre elles étant constituée d'éléments translucides, tels que 23, agissant par transmission.

Ces deux pluralités d'éléments ont un contour rectangulaire, dont le grand côté est disposé verticalement ; bien que, pour la clarté de la description, ceux-ci soient représentés séparés sur la figure, il est avantageux, dans la réalisation pratique, de les juxtaposer sans laisser d'intervalle entre eux.

Ces éléments ont la forme de barreaux parallélépipédiques à base rectangulaire. De plus, les deux projecteurs 1 et 2, chacun correspondant à une image d'un couple, sont, selon l'invention, disposés de part et d'autre de l'écran de projection 3.

Le système de l'invention fonctionne de la façon suivante : l'observateur muni de ses lunettes étant placé en vis-à-vis de la face réfléchissante de l'écran, voit avec son oeil gauche 7 l'image réfléchie par les barreaux tels que 21, et avec son oeil droit 8 l'image transmise par les barreaux translucides tels que 22.

L'avantage de l'écran de l'invention résulte du fait que les éléments translucides, tout en possédant la propriété de conserver la polarisation de la lumière lors de la transmission des images, possèdent un coefficient de transmission de la lumière très élevé, de l'ordre de 90 à 95 %. L'image stéréoscopique obtenue est donc ainsi beaucoup plus lumineuse, ce qui est un des avantages recherchés et procurés par l'invention.

Il est à noter que la différence de luminosité entre les deux images ne constitue pas un inconvénient, car, suivant des données psycho-physiologiques connues, la perception du relief stéréoscopique est obtenue même pour des différences de luminosité élevées entre les deux images d'un couple.

La figure 3 représente une variante du système de projection de l'invention, permettant l'observation sur les deux faces de l'écran.

Suivant cette variante, les éléments agissant par réflexion sont recouverts de couches 31 et 32 de matériau réfléchissant sur les deux faces du support 30. Il est ainsi possible d'observer les images d'un couple stéréoscopique des deux côtés de l'écran, le spectateur étant muni de lunettes à filtres de polarisation telles que 34.

La figure 4 représente, en coupe partielle, un mode de réalisation particulièrement avantageux de l'écran du système de l'invention.

L'écran est constitué de la superposition sous forme d'un assemblage en "sandwich", d'une part de deux surfaces agissant par réflexion 41 et 42, chacune comprenant un support 43 et une couche d'un matériau réfléchissant 44, et d'autre part d'une plaque ou feuille 45 d'un matériau translucide agissant par transmission.

Les surfaces réfléchissants 41 et 42 portent des ouvertures telles que 46 et 47, disposées en vis-à-vis, par lesquelles la lumière peut passer pour assurer la vision des images vues par transmission.

Cette variante se prête particulièrement bien à un mode de réalisation en trois couches minces souples, collées entre elles, autorisant une mise en oeuvre par enroulement et déroulement sur un mandrin cylindrique.

Dans les modes de réalisation décrits de l'écran du système de l'invention, les pluralités d'éléments réfléchissants et translucides ont des contours rectangulaires. Mais cette forme est donnée à titre d'exemple, et toute autre forme de contour, telle que polygonale ou circulaire est comprise dans l'invention.

De même, c'est à titre d'exemple que la répartition de ces éléments est décrite suivant une disposition géométrique régulière ; est comprise dans l'invention une répartition erratique suivant une loi de hasard, assurant une proportion définie entre les surfaces des deux pluralités d'éléments réfléchissants et translucides ; un exemple connu d'une telle répartition erratique est celui de la granulation d'une image photographique agrandie.

Un des avantages d'une telle répartition erratique est d'assurer l'invisibilité de la structure périodique de l'écran de l'invention, qui peut être jugée comme gênante. Un autre avantage est, dans le cas où les images projetées sont du type "vidéo", et par conséquent possèdent une structure périodique due au balayage des lignes, d'éviter ainsi tout effet visuel de "moirage".

Dans les modes de réalisation décrits du système de l'invention, les éléments translucides n'ont aucune fonction réfléchissante. Il est cependant compris dans l'invention le mode de réalisation où ces éléments sont recouverts d'une couche de matériau réfléchissant, d'épaisseur déterminée pour assurer une transmission lumineuse partielle, la proportion entre lumière réfléchie et lumière transmise étant ajustée par libre choix de ladite épaisseur.

**Revendications**

R..1 . Système de projection optique sur écran de couples d'images stéréoscopiques, avec sélection par polarisation de la lumière, comportant deux projecteurs ( 1 ) ( 2 ) assurant respectivement la projection respectide l'une et de l'autre image d'un couple, et un écran ( 3 ) avec deux faces, caractérisé en ce que ledit écran comporte un ensemble d'éléments réfléchissants ( 31, 32 ) ne dépolarisant pas la lumière, et un ensemble d'éléments translucides ( 23 ) débouchant sur les deux faces, les deux ensembles étant disposés en juxtaposition, et que chacun des deux projecteurs est respectivement disposé en vis-à-vis d'une des deux faces dudit écran.

R. 2. Système de projection selon la R. 1., caractérisé en ce que les dits éléments réfléchissants sont disposés sur une seule face de l'écran.

R. 3. Système de projection selon la R. 1.,

caractérisé en ce que les dit éléments réfléchissants sont disposés sur les deux faces de l'écran.

R. 4. Système de projection selon l'une des revendications précédentes, caractérisé en ce que le dit écran est réalisé suivant une structure en trois couches, disposées en superposition, une couche interne étant constituée d'un matériau translucide, et deux couches externes portant un ensemble d'ouvertures placées en vis-à-vis, l'une au moins étant recouverte extérieurement d'un matériau réfléchissant ne dépolarisant pas la lumière.

R. 5. Système de projection selon la R. 1., caractérisé en ce que les éléments des dits ensembles ont des contours en forme de rectangle, dont le grand côté est vertical.

R. 6. Système de projection selon la R. 1., caractérisé en ce que la répartition respective des éléments réfléchissants et des éléments translucides est déterminée suivant une loi erratique de hasard.

fig.1

fig.2

fig.3

fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 203 687 (LAND) <br> * Colonne 2, lignes 29-44 * <br> --- | 1 | G 02 B 27/26 <br> G 03 B 35/20 <br> G 03 B 21/60 |
| A | FR-A-1 503 391 (GRINDA) <br> * Résumé; figure * <br> --- | 1 | |
| A | FR-A-1 470 635 (MARKS) <br> * Page 2, colonne 2, ligne 43 - page 3, colonne 1, ligne 38; figures 1-4 * <br> --- | 1,2,4,5 | |
| A | FR-A-2 584 830 (TAILLEUR) <br> * Revendication 1; figures 2,3 * <br> --- | 1 | |
| A | US-A-3 844 645 (FORSTER) <br> * Résumé; figure 1 * <br> --- | 1 | |
| A | FR-A-2 480 469 (FLEURI) <br> * Page 2, ligne 17 - page 3, ligne 7; figure 1 * <br> ----- | 1 | |

DOMAINES TECHNIQUES RECHERCHES (Int. Cl.4)

G 02 B
G 03 B
G 09 F

Le présent rapport a été établi pour toutes les revendications

| Lieu de la recherche | Date d'achèvement de la recherche | Examinateur |
|---|---|---|
| LA HAYE | 11-07-1989 | GRUNFELD M.Y.E. |

EPO FORM 1503 03.82 (P0402)